# EUROPEAN PATENT APPLICATION

(11) **EP 4 438 933 A1**
(43) Date of publication of application: **02.10.2024**
(21) Application number: 23166057.2
(22) Date of filing: 31.03.2023
(51) Int. Cl.: F16L 13/02, B23K 37/04, B25B 5/00, B64D 1/00, F16B 2/06, F16L 23/00, F16L 23/22, F16L 59/14

(54) **METHOD OF MAKING A WELD CONNECTION FOR A FLUID LINE, METHOD OF DISCONNECTING IT, WELDED FLUID LINE CONNECTION, AND MOUNTING TOOL**

(71) Applicant: Airbus Operations GmbH, 21129 Hamburg (DE)
(72) Inventor: Engel, Wolfgang, 21129 Hamburg (DE); Schulze-Reimann, Kai, 21129 Hamburg (DE)
(74) Representative: KASTEL Patentanwälte PartG mbB

(57) **Abstract**

A method of making a weld connection for a fluid line, in particular for the transport of liquid hydrogen, comprises the steps: (a) providing a first fastener (11) connected to a first fluid line (12) and a second fastener (13) connected to a second fluid line (14); (b) positioning the fasteners (11, 13) so that they face each other; (c) providing a sealing element (16) between the first fastener (11) and the first fastener (13) so that it encloses an inner piping (17) provided within the fasteners (11, 13) when they are connected; (d) pressing the first fastener (11) and the second fastener (13) against each other so that the sealing element (16) is pressed between the fasteners (11, 13) and seals the enclosed inner piping (17); and (e) welding the first fastener (11) to the second fastener (13), whereby a continuous weld connection (10) is created which completely surrounds the sealing element (16) and the enclosed inner piping (17).

## Description

The invention relates to a method of making a weld connection for a fluid line, as well as to a method of disconnecting a welded fluid line connection. Further, the invention relates to a welded fluid line connection. Still further, the invention relates to a mounting tool for connecting fluid lines.

The invention is in particular applicable for cryogenic or liquid hydrogen piping in aviation, where liquid hydrogen (LH2) pipes are connected to each other or to a specific equipment which e.g. uses the hydrogen.

The invention can also be applied in all other applications where a welded connection is preferred and cleanliness of the piping is important.

Couplings between LH2 pipes or equipment parts which use LH2 are for example bolted with seals. However, hydrogen may diffuse through the seals. Therefore, a weld connection is usually preferred for liquid hydrogen pipe connections or couplings, which prevents the hydrogen from escaping from the coupling.

However, the welding and cutting processes result in swarf and debris which may penetrate into the piping.

It is the object of the invention to provide a weld connection for a fluid line and a method of making same, which prevents hydrogen and other substances from escaping, and which prevents a pollution of the inner piping due to the welding and/or cutting process. Further, a pollution of the inner piping by debris or similar materials shall be prevented when the interconnected pipes or parts are disconnected e.g. by a cutting process. In addition, a tool shall be provided which enables or facilitates the creation of such a weld connection.

According to a first aspect, the invention provides a method of making a weld connection for a fluid line, comprising the steps: providing a first fastener connected to a first fluid line and a second fastener connected to a second fluid line; providing a sealing element between the first fastener and the second fastener so that it encloses an inner piping provided within the fasteners when they are connected; pressing the first and the second fastener against each other so that the sealing element is pressed between the fasteners and seals the enclosed inner piping; and welding the first fastener to the second fastener, whereby a continuous weld connection is created which completely surrounds the sealing element and the enclosed inner piping.

In particular, the fluid lines or only one of them may be configured as a pipe or line configured for the transport of liquid hydrogen. It may also be configured as an equipment part which shall be connected to the liquid hydrogen line or pipe.

Preferably, the fasters or at least one of the fasteners may be configured as a flange.

As an alternative, the fasteners are configured as portions of the lines or pipes which are formed to be connected by inserting them into each other and welding both together. In this case, the fasteners are e.g. end portions of the lines or pipes.

Preferably, the fasteners are positioned relative to each other via locating elements or locator elements provided between the fasteners, and clamped together before they are welded to each other.

Preferably the fasteners are positioned so that they face each other before they are connected.

The sealing element may either be positioned, e.g. on one of the fasteners, before they are positioned via the locating elements, or it may be positioned between the fasteners after the fasteners are positioned via the locating elements.

The locating elements are preferably configured as pins or locating pins.

Preferably, at least one of the fluid lines is grabbed by a mounting tool.

Preferably, at least one of the fasteners is surrounded by the mounting tool which presses the fasteners against each other.

According to a second aspect, the invention provides a method of disconnecting a welded fluid line connection, wherein the fluid line connection comprises at least two fasteners welded together and wherein each fastener is connected to a fluid line, a sealing element positioned between the fasteners so that it encloses and seals an inner piping provided within the interconnected fasteners, and a weld joint completely surrounding the sealing element, the method comprising the steps:
(a) opening the weld joint while holding the fasteners together;
(b) creating a gap between the fasteners while the sealing element is still contacting both fasteners and enclosing the inner hydrogen piping;
(c) blowing out and/or rinsing out the gap;
(d) thereafter separating the fasteners from each other.

According to a third aspect, the invention provides a welded fluid line connection, comprising: a first fastener connected to a first fluid line and a second fastener connected to a second fluid line, wherein the fasteners are welded together at a welding area which forms a continuous weld joint which completely surrounds and seals an inner piping of the interconnected fasteners, a sealing element provided between the first and second fastener, wherein the sealing element is positioned between the inner piping and the welding area and completely surrounds and seals the inner piping.

Preferably, the sealing element is compressed between the fasteners.

Preferably, at least one of the fluid lines is configured as a pipe.

Preferably, at least one of the fluid lines is configured as an equipment unit of a fluid line installation.

Preferably, the fasteners are configured as flanges.

Preferably, the fluid lines are configured to transport hydrogen, in particular liquid hydrogen.

Preferably, locating elements provided between the fasteners are designed to exactly position the fasteners relative to each other.

In particular, the locating elements may be formed as pins.

According to a fourth aspect, the invention provides a mounting tool for connecting fluid lines, wherein a first fluid line and a second fluid line are each comprising a fastener provided at an end of the respective fluid line, the mounting tool comprising: a first clamp unit configured to hold the first fluid line and/or the fastener provided at its end; a second clamp unit configured to press the fastener of the second fluid line against the fastener of the first fluid line; wherein the first and second clamp units are movable against each other to press the fasteners together and comprise (a) a pipe clamp configured to hold one of the fluid lines, and/or (b) one or more arms configured to surround at least one of the fasteners in order to press it against the other fastener.

Preferably, the arms are removable.

Preferably, the arms are equally distributed over the fastener when it is pressed against the other fastener.

Preferably, the fasteners are configured as flanges.

Preferably, at least one of the fluid lines is configured as a pipe, in particular as a pipe for the transport of liquid hydrogen.

The weld connection according to the invention is in particular applicable for liquid hydrogen pipes. It is leak tight due to the continuous surrounding welding, and by the inner sealing it protects the pipe inside against contamination from the welding and/or cutting process. The inner seal also acts as a redundant seal or sealing method to achieve dissimilar double barrier against leakage.

In particular, the invention provides a welded piping connection protecting the inner pipes with a seal from the welding area in order to prevent pollution of the inner piping due to the welding and/or a cutting. In particular, swarf or debris generated by welding and/or cutting is prevented from entering into the piping.

Characteristics and advantages described in relation to the method of making a weld connection are also related to the method of disconnecting a welded fluid line connection and to the welded fluid line connection. The same applies vice versa, and it applies also for the mounting tool.

In the following, a particularly preferred embodiment of the invention showing further characteristics and advantages is described in detail with reference to the figures, in which:
- **Fig. 1**: shows welded fluid line connection according to a preferred embodiment of the invention as a side view; and
- **Fig. 2**: shows the fluid line connection depicted in Fig. 1 as a sectional view along dotted line A - A' in Fig. 1

In the figures, similar or identical elements and features are designated by the same reference numbers.

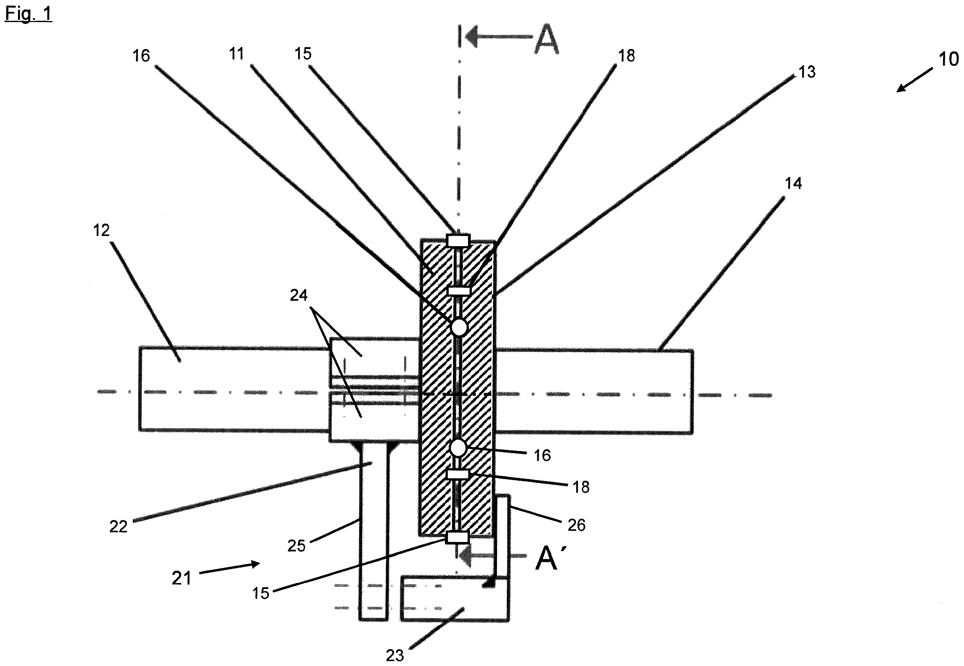

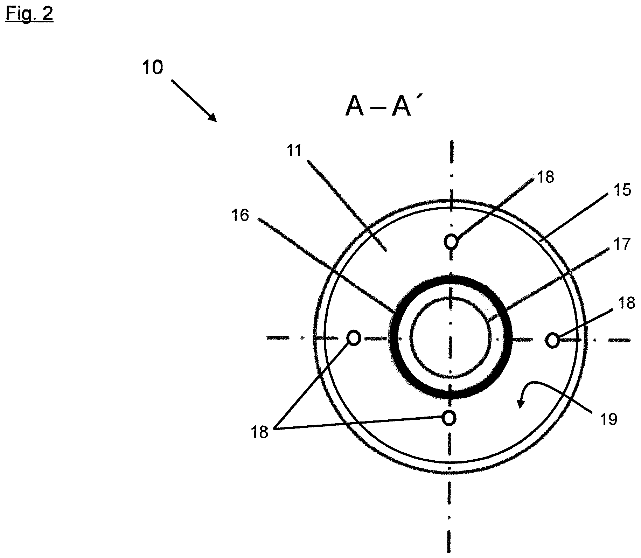

**Figs. 1** **and** **2** show a welded fluid line connection 10 which is designed for the transport of liquid hydrogen. The connection 10 forms a coupling or LH2 coupling. It comprises a first fastener 11 which is connected to a first fluid line 12, and a second fastener 13 which is connected to a second fluid line 14. In this preferred embodiment, the fasteners 11 and 13 are configured as flanges and the fluid lines 12, 14 are each configured as a pipe.

The fasteners or flanges 11, 13 are welded together at a welding area 15 which forms a continuous weld joint. The welding area 15 completely surrounds and seals an inner piping 17 of the interconnected flanges 11, 13.

A sealing element 16 is provided between the first fastener or flange 11 and the second fastener or flange 13. As depicted in Fig. 2, sealing element 16 is positioned between an inner piping 17 and the welding area 15 and completely surrounds and seals the inner piping 17.

The sealing element 16 is compressed between the flanges 11, 13.

A number of locating elements formed as locating pins 18 are extending between the flanges 11, 13. In this preferred embodiment, each locating pin 18 is provided in one of the flanges 11, 13 and is in mutual engagement with a recess or a hole provided in the opposite flange. The locating pins or locator pins 18 provide an exact positioning of the flanges 11, 13 relative to each other when they are connected to each other.

A shown in Fig. 2, the fasteners or flanges 11, 13 are formed as discs in this embodiment. Both flanges 11, 13 have a flat connection surface 19 for mutual connection. In other embodiments, the fasteners 11, 13 may have another shape providing a common connection surface where they are contacting each other when they are being connected.

The sealing element or sealing 16 is annular and extends on connection surface 19 around the inner piping 17 in order to seal it from the outside.

In the following, also with reference to figures 1 and 2, a preferred example of a method of making a weld connection 10 is described. In this example, the weld connection 10 as described above is created.

As a first step, first fastener or flange 11 which is connected to first fluid line or pipe 12 is provided, and second fastener or flange 13 which is connected to second fluid line or pipe 14 is provided.

Then, the flanges 11, 12 are positioned via locating pins 18 so that they face each other. Sealing element 16 is positioned between the first flange 11 and the second flange 13 so that it encloses inner piping 17 within the fasteners when they are connected.

It is possible to position sealing element 16 first, e.g. on one of the fasteners 11, 12, and then both flanges 11, 13 are positioned via the locating pins 18. As an alternative, the sealing element can be positioned between the flanges 11, 12 after they are positioned via the locating pins 18.

Then, the first and the second fasteners or flanges 11, 13 are pressed against each other so that the sealing element 16 is pressed between the flanges 11, 13 and seals the enclosed inner piping 17. For this, a mounting tool 21 forming an installation device is used, which clamps both flanges 11, 13 together. Mounting tool 21 will be explained in more detail further below.

Then, the first flange 11 is welded to the second flange 13, whereby a continuous weld connection is created, which completely surrounds the sealing element 16 and the enclosed inner piping 17.

The mounting tool 21 comprises a first clamp unit 22 configured to hold the first pipe 12. It further comprises a second clamp unit 23 configured to press flange 13 provided at the end of pipe 14 against flange 11 provided at the end of pipe 12.

The first clamp unit 22 comprises two clamp elements formed as half pipes 24 for grabbing the first pipe 12. Thus, it forms a pipe clamp configured to hold first pipe 12 tight between the clamp elements or half pipes 24. In the preferred embodiment, the clamp or clamp unit 22 comprises two half pipes 24 which are bolted together.

The mounting tool 21 has several arms 25, 26 to fix both ends of the parts to be connected, in particular for initial spot welding. For clarity reason, only two arms are shown in the figures, however, there may be a higher number of arms 25, 26. Ba the arms 25, 26 the flanges are pressed together symmetrically and evenly. The arms 25, 26 are provided by clamps 22, 23 to surround the two flanges 11, 13 and to press them together, so that the seal 16 gets effective in protecting the inner piping 17 from the area to be welded 15. There are preferably several arms 25, 26 which are equally distributed over the flanges 11, 13. Advantageously, the arms 25, 26 are removable

The first and second clamp units 22, 23 are movable against each other in order to firmly press the flanges 11, 13 together, i.e. against each other.

After that, the flanges 11, 13 are spot welded, the clamps 22, 23 are removed and then the flanges 11, 13 are completely welded. Swarf falling down from the welding process is falling between the welding area 15 and the seal 16. It will stay there encapsulated throughout the lifetime of the connection 10 and thus it will not contaminate the inner piping 17. The seal 16 is positioned far enough from the welding area 15 in order to be protected against the welding heat.

When reopening the weld connection 10, the process is done in the opposite way. First, the weld joint 15 is cut open e.g. with a milling machine or a similar tool while holding the fasteners or flanges 11, 13 together. Thus, a gap is created between the fasteners 11, 13 at or near the outer edge of the weld connection while the sealing element 16 is still contacting both fasteners 11, 13 and enclosing the inner piping 17.

Then, the space or gap between the two flanges 11, 13 is flushed and cleaned from swarf before removing the clamping tool 21. The gap is e.g. blown out or rinsed out e.g. by pressurized air or by water.

Finally, the two pipes 12, 14 are detached. The fasteners 11, 13 are separated from each other, and the seal 16 may be removed.

The embodiment described above shall be understood as just one example. The invention can be realized by other possible forms of constructions which comprise an inner seal and an outer welded connection. Also the clamps shown in the figures may be differently designed. The locator pins or elements may be differently positioned, e.g. closer to the center of the flanges or at other locations. In other preferred embodiments, the locator pins are e.g. designed as tongues and grooves.

The invention is designed for connecting cryogenic (liquid) hydrogen piping, in particular in aviation. However, it can also be applied in other applications, where a welded connection is preferred and cleanliness of the inner piping is important.

### List of reference numbers:

- 10: fluid line connection / weld connection
- 11: first fastener or flange
- 12: first fluid line or pipe
- 13: second fastener or flange
- 14: second fluid line or pipe
- 15: welding area /weld joint
- 16: sealing element / seal
- 17: inner piping
- 18: as locating elements or pins
- 19: connection surface
- 21: mounting tool
- 22: first clamp unit or clamp
- 23: second clamp unit or clamp
- 24: clamp elements / half pipes
- 25, 26: arms

## Claims

1. Method of making a weld connection for a fluid line, comprising the steps:
(a) Providing a first fastener (11) connected to a first fluid line (12) and a second fastener (13) connected to a second fluid line (14);
(b) providing a sealing element (16) between the first fastener (11) and the first fastener (13) so that it encloses an inner piping (17) provided within the fasteners (11, 13) when they are connected;
(c) pressing the first fastener (11) and the second fastener (13) against each other so that the sealing element (16) is pressed between the fasteners (11, 13) and seals the enclosed inner piping (17); and
(d) welding the first fastener (11) to the second fastener (13), whereby a continuous weld connection (10) is created which completely surrounds the sealing element (16) and the enclosed inner piping (17).

2. Method according to claim 1, **characterized in that** the fasteners (11, 13) are positioned via locating elements (18) provided between the fasteners (11, 13) and clamped together before they are welded to each other.

3. Method according to claim 1 or 2, **characterized in that** at least one of the fluid lines (12, 14) is grabbed by a mounting tool (21), and at least one of the fasteners (11, 13) is surrounded a by the mounting tool (21) which presses the fasteners (11, 13) against each other.

4. Method of disconnecting a welded fluid line connection, wherein the fluid line connection comprises
at least two fasteners (11, 13) welded together, wherein each fastener (11, 13) is connected to a fluid line (12, 14), a sealing element (16) positioned between the fasteners (11, 13) so that it encloses and seals an inner piping (17) provided within the interconnected fasteners (11, 13), and a weld joint (10) completely surrounding the sealing element (16),
the method comprising the steps:
(a) opening the weld joint (10) while holding the fasteners (11, 13) together;
(b) creating a gap between the fasteners (11, 13) while the sealing element (16) is still contacting both fasteners (11, 13) and enclosing the inner piping (17);
(c) blowing out and/or rinsing out the gap;
(d) thereafter separating the fasteners (11, 13) from each other.

5. Welded fluid line connection, comprising:
a first fastener (11) connected to a first fluid line (12) and a first fastener (13) connected to a second fluid line (14),
wherein the fasteners (11, 13) are welded together at a welding area (15) which forms a continuous weld joint (10) which completely surrounds and seals an inner piping (17) of the interconnected fasteners (11, 13),
a sealing element (16) provided between the first fastener (11) and the second fastener (13), wherein the sealing element (16) is positioned between the inner piping (17) and the welding area (15) and completely surrounds and seals the inner piping (17).

6. Welded fluid line connection according to claim 5, **characterized in that** the sealing element (16) is compressed between the fasteners (11, 13).

7. Welded fluid line connection according to claim 5 or 6, **characterized in that**
7.1. at least one of the fluid lines (12, 14) is configured as a pipe; and/or
7.2. at least one of the fluid lines (12, 14) is configured as an equipment unit of a fluid line installation; and/or
7.3. the fasteners (11, 13) are configured as flanges; and/or
7.4. the fluid lines (12, 14) are configured to transport liquid hydrogen.

8. Welded fluid line connection according to one of claims 5 to 7, **characterized by** locating elements (18) provided between the fasteners (11, 13) designed to exactly position the fasteners (11, 13) relative to each other.

9. Mounting tool for connecting fluid lines, wherein a first fluid line (12) and a second fluid line (14) are each comprising a fastener (11, 13) provided at an end of the respective fluid line (12, 14), the mounting tool (10) comprising:
a first clamp unit (22) configured to hold the first fluid line (12) and/or the fastener (11) provided at its end;
a second clamp unit (23) configured to press the fastener (13) of the second fluid line (14) against the fastener (11) of the first fluid line (12);
wherein the first and second clamp units (22, 23) are movable against each other to press the fasteners (11, 13) together and comprise
(a) a pipe clamp (24) configured to hold one of the fluid lines (12), and/or
(b) one or more arms (25, 26) configured to surround one of the fasteners (11, 13) in order to press it against the other fastener (11, 13).

10. Mounting tool according to claim 9, **characterized in that**
10.1. the arms (25, 26) are removable; and/or
10.2. the arms (25, 26) are equally distributed over the fastener (13) when it is pressed against the other fastener (11); and/or
10.3. the fasteners (11, 13) are configured as flanges; and/or
10.4. at least one of the fluid lines (12, 14) is configured as a pipe.
